# EUROPÄISCHE PATENTSCHRIFT

(11) **EP 2 769 803 B1**
(45) Veröffentlichungstag und Bekanntmachung des Hinweises auf die Patenterteilung: **27.09.2017**
(21) Anmeldenummer: 14156370.0
(22) Anmeldetag: 24.02.2014
(51) Int. Cl.: B23P 19/04, B60J 10/00

(54) **Haltevorrichtung**
Clamping device
Dispositif de préhension

(30) Priorität: 25.02.2013 DE 102013101845
(43) Veröffentlichungstag der Anmeldung: 27.08.2014
(73) Patentinhaber: Symax Systemtechnik Sondermaschinenbau Gmbh, 93073 Neutraubling (DE)
(72) Erfinder: Thommes, Lothar, 54634 Bitburg (DE); Gronbach, Christian, 93096 Köfering (DE)
(74) Vertreter: Glück Kritzenberger Patentanwälte PartGmbB

(56) Entgegenhaltungen:
- DE-B3-102005 039 170
- GB-A- 2 344 561

## Beschreibung

### Technisches Gebiet

Die Erfindung bezieht sich auf eine Haltevorrichtung gemäß Oberbegriff Patentanspruch 1.

### Stand der Technik

Insbesondere bei Montieren von Dichtungen in Form von gummielastischen Dichtungsprofilen an Bauteilen, beispielsweise auch an Fahrzeugkomponenten, entlang eines mit der Dichtung zu versehenen Bereichs, beispielsweise entlang des Randes einer Fahrzeugtür oder Fahrzeugöffnung ist es erforderlich, die Dichtung bzw. das entsprechende Dichtungsprofil zumindest auf einer Teillänge vorübergehend zu halten bzw. zu fixieren, beispielsweise auf der jeweiligen vorauseilenden Teillänge des von einem Endlos-Vorrat abgezogenen Dichtungsprofils.

Aus der DE 10 2005 039 170 B3 ist eine Montagevorrichtung zur Fixierung eines Dichtungsprofils mit den Merkmalen des Oberbegriffs des Anspruchs 1 bekannt.

### Darstellung der Erfindung

Aufgabe der Erfindung ist es, eine Haltevorrichtung für Dichtungen aufzuzeigen, die vielseitig verwendbar ist, insbesondere auch bei der Montage von Dichtungen an Produkten, beispielsweise Fahrzeugkomponenten. Zur Lösung dieser Aufgabe ist eine Haltevorrichtung entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren.

Die vorliegende Erfindung stellt eine Haltevorrichtung zum Halten von Dichtungen aus einem gummielastischen Material, vorzugsweise von als Hohlprofil ausgebildeten Dichtungen oder deren Dichtungsprofilen bereit. Die Haltevorrichtung umfasst eine in einem Vorrichtungskörper oder Gehäuse gebildete Tasche zur zumindest teilweisen Aufnahme des Dichtungsprofils und wenigstens zwei Fixierelemente. Die Fixierelemente sind durch eine Betätigungseinrichtung in einer Achsrichtung (Z-Achse) senkrecht oder im Wesentlichen senkrecht zu einer Längserstreckung der Tasche zwischen einer nicht wirksamen Stellung und einer wirksamen Stellung bewegbar. Die Fixierelemente sind als Stifte mit nadelspitzenartig ausgebildeten Enden ausgebildet, wobei die Stifte in ihrer wirksamen Stellung mit ihren nadelspitzenartig zulaufenden Enden in die Tasche hineinreichen und gegen das in dieser Tasche aufgenommene Dichtungsprofil dieses fixierend anliegen.

Bevorzugt sind die Fixierelemente in einer Achsrichtung (Z-Achse) parallel zu der Ebene (XZ-Ebene) einer Öffnung der Tasche bewegbar.

Bevorzugt sind wenigstens zwei Fixierelemente einander gegenüberliegend an der Tasche vorgesehen.

Bevorzugt ist einem Fixierelement an einer Seite der Tasche ein Fixierelement an der anderen Seite der Tasche gegenüber liegend vorgesehen, vorzugsweise achsgleich gegenüber liegend.

Besonders bevorzugt sind an jeder Seite der Tasche wenigstens zwei Stifte vorgesehen.

Gemäß einer weiteren, besonders bevorzugten Ausführungsform der vorliegenden Erfindung umfasst die Haltevorrichtung ein Hebelgetriebe, über welches die Fixierelemente mittels eines Betätigungselementes, vorzugsweise mittels eines Betätigungselementes in Form eines Zylinders gegenläufig bewegt werden. Insbesondere bevorzugt weist das Hebelgetriebe einen doppelarmigen Schwenkhebel auf, dessen beide Enden über Gelenkhebel mit Haltern für die Fixierelemente verbunden sind und der zwischen seinen beiden Enden gelenkig gelagert ist, wobei der Hebel einen sich bezogen auf die Gelenkachse des Hebelgelenks radial und senkrecht vom Hebel wegerstreckenden Hebelarm aufweist, der an seinem Ende mit dem Betätigungselement verbunden ist.

Bevorzugt ist die Haltevorrichtung Bestandteil eines Montagewerkzeugs zum Montieren von Dichtungen an Werkstücken, insbesondere zum Montieren von Dichtungen an Fahrzeugkomponenten.

### Wege zur Ausführung der Erfindung

Die Erfindung wird im Folgenden anhand der Figuren an einem Ausführungsbeispiel näher erläutert. Es zeigen:
Fig. 1 in schematischer Darstellung sowie teilweise im Schnitt eine Haltevorrichtung gemäß der Erfindung;
Fig. 2 eine Ansicht der Haltevorrichtung der Figur 1 in Blickrichtung des Pfeils A der Figur 1.

Zur Vereinfachung der Darstellung sind in den Figuren drei senkrecht zueinander orientierte Raumachsen mit X, Y und Z bezeichnet.

Die in den Figuren allgemein mit 1 bezeichnete Haltevorrichtung (Nagelgreifer) dient zum Halten von Dichtungen 2 oder Dichtungsprofilen 3 aus gummielastischen Material, insbesondere zum Halten von Dichtungen, wie sie im Fahrzeugbau an Fahrzeugkomponenten für einen dichten Abschluss zwischen einer Fahrzeugkarosserie und einer Fahrzeugtür, einem Sonnendach oder einem Kofferraumdeckel verwendet werden. Die Dichtung 2 besteht bei der dargestellten Ausführungsform aus dem als Hohlprofil gefertigten und einen D-förmigen Innen- und Außenquerschnitt aufweisenden Dichtungsprofil 3 aus einem gummielastischen Material, das (Dichtungsprofil 3) an einer flachen Außenseite mit einer Kleberschicht 4 versehen ist, mit das Dichtungsprofil 3 bei der Montage der Dichtung 2 entlang dem abzudichtenden Fahrzeugbereich befestigt wird.

Die Haltevorrichtung 1 selbst besteht im Wesentlichen aus einer Kulisse oder einem Gehäuse 5, welches bei der dargestellten Ausführungsform im Wesentlichen quaderförmig ausgebildet ist und an einer in der XZ-Ebene angeordneten Gehäuseseite 5.1 mit einer eine Aufnahme für die Dichtung 2 bzw. des Dichtungsprofils 3 bildende Ausnehmung 6 versehen ist. Die Ausnehmung 6 ist dabei rinnenartig so geformt, dass sie mit ihrer Längserstreckung L in der X-Achse orientiert das Dichtungsprofil 3 mit der konvexen Seite aufnimmt, während die die Kleberschicht 4 aufweisende Seite freiliegt, d.h. bei der dargestellten Ausführungsform geringfügig über die Gehäuseseite 5.1 vorsteht.

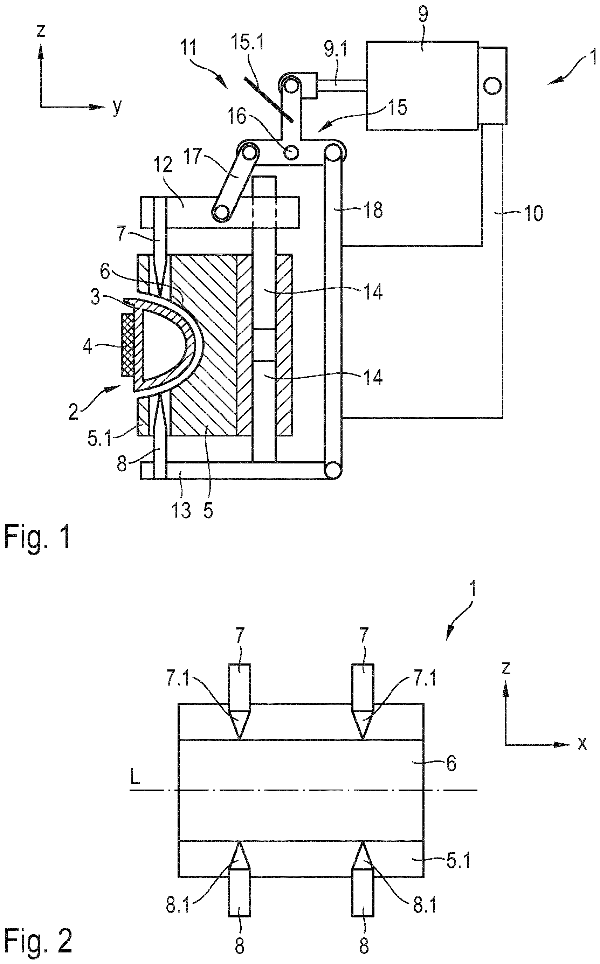

Zum Halten der Dichtung 2 in der Ausnehmung 6 sind mehrere Fixierelemente in Form von Stiften 7 und 8 vorgesehen, die in Öffnungen des Gehäuses 5 axial verschiebbar sind, und zwar jeweils in Richtung der Z-Achse und damit senkrecht zur Längserstreckung L der rinnenförmigen Ausnehmung 6 sowie auch senkrecht zur Längserstreckung des in dieser Ausnehmung 6 aufgenommenen Abschnitts der Dichtungsprofils 3. Die Stifte 7 und 8 sind weiterhin axial so bewegbar, dass sie nach einem Zustellen mit ihren nadelspitzenartig ausgebildeten Enden 7.1 bzw. 8.1 bei der für die Figur 2 gewählten Darstellung oben (Stifte 7) bzw. unten in die Ausnehmung 6 hineinreichen und mit diesen nadelspitzenartig ausgebildeten Enden 7.1 bzw. 7.2 in das Dichtungsprofil 3 eingreifend dieses in der Ausnehmung 6 halten.

Wie die Figuren zeigen, sind bei der dargestellten Ausführungsform zwei obere Stifte 7 an einer Seite der Ausnehmung 6 und diesen bei der dargestellten Ausführungsform achsgleich gegenüberliegend zwei untere Stifte 8 auf der gegenüber liegenden Seite der Ausnehmung 6 vorgesehen, und zwar jeweils dem Öffnungsrand der Ausnehmung 6 benachbart. Weiterhin sind die Stifte 7 und 8 jeweils in Richtung der Längserstreckung L bzw. X-Achse gegeneinander versetzt vorgesehen.

Die gegenläufige axiale Bewegung der Stifte 7 und 8 zwischen der Ausgangsstellung, in der die Enden 7.1 und 8.1 sich außerhalb der Ausnehmung 6 befinden und einer Stellung, in der diese Enden 7.1 und 8.1 in die Ausnehmung 6 zum Halten der Dichtung 2 hineinreichen, wird durch ein Betätigungselement 9 erzeugt, welches bei der dargestellten Ausführungsform von einem Zylinder, beispielsweise von einem pneumatischen Zylinder gebildet ist, der mit seinem Zylindergehäuse an einer Verlängerung 10 des Gehäuses 5 gehalten bzw. angelenkt ist und dessen Kolben bzw. Kolbenstange 9.1 mit einem Hebelgetriebe 11 zusammenwirkt, welches Halter 12 und 13, an denen die Stifte 7 (Halter 12) sowie die Stifte 8 (Halter 13) befestigt sind, gegenläufig bewegt. Die Halter 12 und 13 sind parallel zu den Achsen der Stifte 7 und 8, d.h. in Richtung der Z-Achse in dem Gehäuse 5 geführt, und zwar jeweils mittels einer Linearführung 14.

Das Hebegetriebe 11 besteht bei der dargestellten Ausführungsform aus einem doppelarmigen Hebel 15, der in der Mitte bei 16 um eine Achse parallel zur Längserstreckung L, d.h. um die X-Achse schwenkbar gelagert ist und dessen Enden über einen Gelenkhebel 17 mit dem Halter 12 und über einen Gelenkhebel 18 mit den Halter 13 verbunden sind. Der Hebel 15 weist weiterhin einen Hebelarm 15.1 auf, der sich von der Mitte des Hebels 15 radial zur Achse des Gelenks 16 senkrecht vom Hebel 15 wegerstreckt und dessen freies Ende mit der Kolbenstange 9.1 verbunden ist.

Die Verwendung der Haltevorrichtung 1 erfolgt grundsätzlich so, dass die Dichtung 2 bzw. das Dichtungsprofil mit einer Teillänge bei zurückbewegten Stiften 7 und 8 in die Ausnehmung 6 eingesetzt und dann durch Zustellen der Stifte 7 und 8 in der Ausnehmung 6 bzw. an der Haltevorrichtung 1 fixiert wird.

Die Haltevorrichtung 1 ist grundsätzlich vielseitig verwendbar. Bevorzugt ist die Haltevorrichtung 1 Bestandteil eines beispielsweise an einem Roboter oder an einem Manipulator vorgesehenen Montagewerkzeugs für das maschinelle Montieren der Dichtung 2 an einer Fahrzeugkomponente. Hierbei wird das Dichtungsprofil 3 mit dem Montagewerkzeug von einem Vorrat abgezogen und dabei mit der Kleberschicht 4 entlang des mit der Dichtung 2 zu versehenen Bereichs der Fahrzeugkomponente fixiert. Die Montage der Dichtung 2 wird dadurch beendet, dass die mit der Fahrzeugkomponente verbundene Länge des Dichtungsprofils 3 von dem restlichen Dichtungsprofil abgetrennt wird. Bevorzugt bereits vor diesem Abtrennen wird das vorauseilende Ende des nicht mit der Fahrzeugkomponente verbundenen Dichtungsprofil 3 in der am Montagewerkzeug vorgesehenen Haltevorrichtung 1 fixiert, sodass dann beginnend mit diesem in der Haltevorrichtung 1 gehaltenen Ende eine weitere Dichtung an einer weiteren Fahrzeugkomponente montiert werden kann. Es versteht sich, dass hierbei nach dem Fixieren der in der Haltevorrichtung 1 gehaltenen Teillänge des Dichtungsprofils 3 an der Fahrzeugkomponente diese Teillänge durch Zurückbewegen der Stifte 7 und 8 freigegeben wird.

### Bezugszeichenliste

- 1: Haltevorrichtung
- 2: Dichtung
- 3: Dichtungsprofil
- 4: Kleberschicht
- 5: Gehäuse
- 5.1: Gehäuseseite
- 6: rinnenförmige Ausnehmung
- 7, 8: Stift
- 9: Betätigungselement oder Zylinder
- 10: Verlängerung des Gehäuses 5
- 11: Hebelgetriebe
- 12, 13: Halter
- 14: Linearführung
- 15: Hebel
- 15.1: Hebelarm
- 16: Gelenk
- 17, 18: Hebel
- L: Längserstreckung der Ausnehmung oder Tasche 6
- X, Y, Z: Raumachse

## Patentansprüche

1. Haltevorrichtung zum Halten von Dichtungen (2) aus einem gummielastischen Material, vorzugsweise von als Hohlprofil ausgebildeten Dichtungen oder deren Dichtungsprofilen (3), wobei eine in einem Vorrichtungskörper oder Gehäuse (5) gebildete Tasche zur zumindest teilweisen Aufnahme des Dichtungsprofils (3) und wenigstens zwei Fixierelemente (7, 8) vorgesehen sind, wobei die Fixierelemente (7, 8) durch eine Betätigungseinrichtung (8, 11, 12, 13) in einer Achsrichtung (Z-Achse) senkrecht oder im Wesentlichen senkrecht zu einer Längserstreckung (L) der Tasche (6) zwischen einer nicht wirksamen Stellung und einer wirksamen Stellung bewegbar sind, **dadurch gekennzeichnet, dass** die Fixierelemente (7, 8) als Stifte mit nadelspitzenartig ausgebildeten Enden (7.1, 7.2) ausgebildet sind, wobei die Stifte in ihrer wirksamen Stellung mit ihren nadelspitzenartig zulaufenden Enden (7.1, 8.1) in die Tasche (6) hineinreichen und gegen das in dieser Tasche (6) aufgenommene Dichtungsprofil (3) dieses fixierend anliegen.

2. Haltevorrichtung nach Anspruch 1, **dadurch gekennzeichnet, dass** die Fixierelemente (7, 8) in einer Achsrichtung (Z-Achse) parallel zu der Ebene (XZ-Ebene) einer Öffnung der Tasche (6) bewegbar sind.

3. Haltevorrichtung nach Anspruch 1 oder 2, **dadurch gekennzeichnet, dass** wenigstens zwei Fixierelemente (7, 8) einander gegenüberliegend an der Tasche (6) vorgesehen sind.

4. Haltevorrichtung nach einem der vorhergehenden Ansprüche, **dadurch gekennzeichnet, dass** einem Fixierelement (7) an einer Seite der Tasche (6) ein Fixierelement (8) an der anderen Seite der Tasche (6) gegenüber liegend vorgesehen ist, vorzugsweise achsgleich gegenüber liegend.

5. Haltevorrichtung nach einem der vorhergehenden Ansprüche, **dadurch gekennzeichnet, dass** an jeder Seite der Tasche (6) wenigstens zwei Stifte (7, 8) vorgesehen sind.

6. Haltevorrichtung nach einem der vorhergehenden Ansprüche, **gekennzeichnet durch** ein Hebelgetriebe (11), über welches die Fixierelemente (7, 8) mittels eines Betätigungselementes (9), vorzugsweise mittels eines Betätigungselementes in Form eines Zylinders gegenläufig bewegt werden.

7. Haltevorrichtung nach Anspruch 6, **dadurch gekennzeichnet, dass** das Hebelgetriebe einen doppelarmigen Schwenkhebel (15) aufweist, dessen beide Enden über Gelenkhebel (17, 18) mit Haltern (12, 13) für die Fixierelemente (7, 8) verbunden und der zwischen seinen beiden Enden gelenkig gelagert ist, und dass der Hebel (15) einen sich bezogen auf die Gelenkachse des Hebelgelenks (16) radial und senkrecht vom Hebel wegerstreckenden Hebelarm (15.1) aufweist, der an seinem Ende mit dem Betätigungselement (9) verbunden ist.

8. Haltevorrichtung nach einem der vorhergehenden Ansprüche, **dadurch gekennzeichnet, dass** sie Bestandteil eines Montagewerkzeugs zum Montieren von Dichtungen an Werkstücken, insbesondere zum Montieren von Dichtungen an Fahrzeugkomponenten ist.

## Claims

1. A clamping device for holding seals (2) made from a rubber-elastic material, preferably seals formed as a hollow profile or sealing profiles (3) thereof, wherein a pocket formed in a device body or housing (5) for at least partially receiving the sealing profile (3) and at least two fixing elements (7, 8) are provided, wherein the fixing elements (7, 8) can be moved by an actuating device (8, 11, 12, 13) in an axis direction (Z-axis) perpendicular or substantially perpendicular to a longitudinal extension (L) of the pocket (6) between a non-active position and an active position, **characterized in that** the fixing elements (7, 8) are formed as pins with needlepoint-like ends (7.1, 7.2), wherein the pins in their active position extend with their needlepoint-like tapered ends (7.1, 8.1) into the pocket (6) and abut in a fixing manner against the sealing profile (3) received in this pocket (6).

2. The clamping device according to claim 1, **characterized in that** the fixing elements (7, 8) can be moved in an axis direction (Z-axis) parallel to the plane (XZ-plane) of an opening of the pocket (6).

3. The clamping device according to claim 1 or 2, **characterized in that** at least two fixing elements (7, 8) are provided opposing one another at the pocket (6).

4. The clamping device according to any one of the preceding claims, **characterized in that** opposite to a fixing element (7) on one side of the pocket (6) a fixing element (8) on the other side of the pocket (6) is provided, preferably in a coaxially opposing manner.

5. The clamping device according to any one of the preceding claims, **characterized in that** at least two pins (7, 8) are provided on each side of the pocket (6).

6. The clamping device according to any one of the preceding claims, **characterized by** a lever-type gear (11) via which the fixing elements (7, 8) are moved in opposite directions by means of an actuating element (9), preferably by means of an actuating element in the form of a cylinder.

7. The clamping device according to claim 6, **characterized in that** the lever-type gear has a double-armed swiveling lever (15), the two ends of which are connected via joint levers (17, 18) having holders (12, 13) for the fixing elements (7, 8) and which is hinged between its two ends, and that the lever (15) has a lever arm (15. 1) which, with respect to the joint axis of the lever joint (16), extends radially and perpendicularly away from the lever and which is connected at its end to the actuating element (9).

8. The clamping device according to any one of the preceding claims, **characterized in that** it is an integral part of an assembly tool for assembling seals on work pieces, in particular for assembling seals on vehicle components.

## Revendications

1. Dispositif de maintien destiné à maintenir des joints d'étanchéité (2) constitués d'un matériau élastique comme le caoutchouc, de préférence des joints d'étanchéité conçus comme des profilés creux ou leurs profilés d'étanchéité (3), dans lequel il est prévu une poche formée dans un corps de dispositif ou boîtier (5) pour la réception au moins partielle du profilé d'étanchéité (3) et au moins deux éléments de fixation (7, 8), dans lequel les éléments de fixation (7, 8) sont déplaçables par un moyen d'actionnement (8, 11, 12, 13) dans une direction axiale (axe Z) verticalement ou essentiellement verticalement par rapport à une extension longitudinale (L) de la poche (6), entre une position inactive et une position active, **caractérisé en ce que** les éléments de fixation (7, 8) sont conçus comme des tiges avec des extrémités (7.1, 7.2) conçues comme des pointes d'aiguille, dans lequel les tiges font saillie dans la poche (6) avec leurs extrémités (7.1, 8.1) effilées du genre pointes d'aiguille dans leur position active et s'appliquent contre le profilé d'étanchéité (3) reçu dans cette poche (6) tout en fixant celui-ci.

2. Dispositif de maintien selon la revendication 1, **caractérisé en ce que** les éléments de fixation (7, 8) peuvent être déplacés dans une direction axiale (axe Z) parallèlement au plan (plan XZ) d'une ouverture de la poche (6).

3. Dispositif de maintien selon la revendication 1 ou 2, **caractérisé en ce qu'**il est prévu au moins deux éléments de fixation (7, 8) opposés l'un à l'autre sur la poche (6).

4. Dispositif de maintien selon l'une des revendications précédentes, **caractérisé en ce qu'**un élément de fixation (7) situé d'un côté de la poche (6) est placé à l'opposé de l'autre élément de fixation (8) situé de l'autre côté de la poche (6), de préférence de façon axialement opposée.

5. Dispositif de maintien selon l'une des revendications précédentes, **caractérisé en ce qu'**il est prévu au moins deux tiges (7, 8) sur chaque côté de la poche (6).

6. Dispositif de maintien selon l'une des revendications précédentes, **caractérisé par** un mécanisme de levier (11) permettant de déplacer les éléments de fixation (7, 8) dans des directions opposées au moyen d'un élément d'actionnement (9), de préférence au moyen d'un élément d'actionnement sous la forme d'un cylindre.

7. Dispositif de maintien selon la revendication 6, **caractérisé en ce que** le mécanisme de levier présente un levier pivotant à deux bras (15), dont les deux extrémités sont reliées par des leviers articulés (17, 18) avec des supports (12, 13) pour les éléments de fixation (7, 8), et lequel est monté de façon articulée entre ses deux extrémités, et **en ce que** le levier (15) présente un bras de levier (15.1) s'étendant verticalement et radialement du levier par rapport à l'axe d'articulation de l'articulation de levier (16), lequel est relié à l'élément d'actionnement (9) par son extrémité.

8. Dispositif de maintien selon l'une des revendications précédentes, **caractérisé en ce que** celui-ci fait partie d'un outil de montage destiné au montage de joints d'étanchéité sur des pièces usinées, en particulier au montage de joints d'étanchéité sur des composants automobiles.
